# EUROPEAN PATENT APPLICATION

(11) **EP 4 442 846 A1**
(43) Date of publication of application: **09.10.2024**
(21) Application number: 22899666.6
(22) Date of filing: 17.11.2022
(51) Int. Cl.: C22B 1/24, B30B 15/30, C22B 1/245, C10L 5/06

(54) **METHOD AND SYSTEM FOR MANUFACTURING A SOLID AGGLOMERATE**

(30) Priority: 03.12.2021 BR 102021024501
(71) Applicant: Tecnored Desenvolvimento Tecnologico S.A., 12422-281, Pindamonhangaba, SP (BR)
(72) Inventor: DE OLIVEIRA, Ronald, Lopes, 12405-278 Pindamonhangaba, SP (BR); GONÇALVES, Guilherme Francisco, 12412-520 Pindamonhangaba, SP (BR); POTTER, Stephen Michael, 22250-145 Rio de Janeiro, RJ (BR); LOVATTI, Rafael, Araújo, 12422-150 Pindamonhangaba, SP (BR)
(74) Representative: Potter Clarkson
(86) International application number: PCT/BR2022/050451
(87) International publication number: WO 2023/097382

(57) **Abstract**

The present invention relates to systems and processes for manufacturing solid agglomerates. In this scenario, the present invention provides a process for manufacturing a solid agglomerate (5), by means of a roller press (10) comprising two rollers (10a, 10b) provided with cavities (11) fillable with granulated compositions, the process comprising the steps of (i) supplying, from above, a first composition in a first upper angular portion (12a) of each of the rollers (10a, 10b) of the roller press (10); (ii) supply, from above, a second composition on a second upper angular portion (12b) of each of the rollers (10a, 10b) of the roller press (10), where, for the same roller (10a, 10b), the second upper angular portion (12b) is located downstream of the first upper angular portion (12a) with reference to the direction of rotation of each roller (10a, 10b); and (iii) pressing the material supplied on the rollers (10a, 10b) so as to form a solid agglomerate (5) comprising a core (5n) formed by the second composition and a cladding (5r) formed by the first composition. The present invention also provides a system associated with the method described above.

## Description

### FIELD OF INVENTION

The present invention relates to solid agglomerates. More specifically, the present invention relates to a process and system for manufacturing solid agglomerates.

### BACKGROUND OF THE INVENTION

One of the main pieces of equipment where the iron reduction process takes place is called a blast furnace. Its function is to separate the iron Fe from its Fe₂O₃ ore. This separation takes place by means of chemical reduction, which involves separating a metal from its oxide, and is carried out using a reducing agent. This reducing agent is a material that must be more attractive to oxygen, under the conditions of the operation, than the metal to be reduced. The main reducing agent used in the steel industry is coke, which comes from mineral coal.

The steel industry relies heavily on metallurgical coal, which accounts for a large proportion of the final cost of the steel produced. Mineral coal for integrated coking steelmaking is called coking coal, which is an essential substance in the reduction of iron ore to metallic iron, as it combines with oxygen to create carbon dioxide, iron and slag.

The class of coal commonly used for steelmaking is bituminous coal (soft coal) which forms a solid mass when heated (coking coal); on the other hand, if it does not soften or aggregate when heated, it is called non-coking coal.

Nowadays, the use of agglomerates in the steel industry is becoming increasingly common. The agglomeration process consists of grouping together fine-grained materials in order to obtain a larger product using of binders. This process can produce, for example, high-quality metal agglomerates or coal briquettes, taking advantage of the small fractions that are usually discarded. In some cases, coal agglomerates can replace coking coal and metal agglomerates can replace iron ore.

Among the different agglomeration processes, the coal briquetting technique has been gaining ground in the industry. This technique, which can be used for both mineral and vegetable coal, generally involves the stages of: (i) granulometric balancing of the coal or biomass particles; (ii) mixing of binders (agglomerants); (iii) mechanical compaction; and (iv) drying of the briquettes. The documents below describe examples of coal briquettes and their respective production processes.

Document US8585786B2, for example, describes a method and system for briquetting solid fuel, such as coal. In this document, the solid fuel is transported through a continuous feed solid fuel treatment plant, treated with electromagnetic energy and briquetted after treatment.

Document WO2014098413A1 describes a coal briquette and a method for manufacturing it. Said method for manufacturing coal briquettes comprises the steps of (i) supplying coal with low granulometry, (ii) producing a mixture obtained by mixing between 1 and 5 parts by weight of a hardening agent and between 5 and 15 parts by weight of a binder in relation to 100 parts by weight of coal with low granulometry, and (iii) molding the mixture. In the stage of supplying the low rank coal, the low rank coal comprises (i) more than 0 and no more than 50% by weight of low rank coal and (ii) a balance of coal ash. Low rank coal has between 25% by weight and 40% by weight of a volatile fraction (dry basis) and has a crucible expansion number of more than 0 and less than 3.

Document WO2013152959A1 describes a process for producing a briquette containing coals, where the coals together with a binder system are subjected to mixing with steam introduction and the mixture obtained is subjected to pressing to form briquettes. Here, at least one of the steps: (i) drying the carbon carriers before mixing, (ii) setting the temperature of the carbon carriers to be mixed with the binder system before mixing in a predefined temperature range, (iii) heat treatment of the briquettes after pressing, is carried out by means of direct or indirect interaction with superheated steam. The residual steam obtained is used as at least part of the steam introduced during mixing.

Document AU2008203855B2 describes a process for forming a briquette composed of low rank coal and aggregate material, characterized in that it comprises: drying a feed of low rank coal to produce a dry coal with a moisture content of between 8 and 16% by weight; mixing the dry coal with an aggregate material; and compacting the dry coal and aggregate material mixture into briquettes.

However, the current state of the art lacks techniques that allow the manufacture of briquettes comprising more than one different composition where each composition would be located in a certain region of the briquette.

The proposed invention solves the problems described above in a simple and efficient way.

### SUMMARY OF THE INVENTION

The main objective of the present invention is to provide a system and a process for manufacturing a solid agglomerate so that it comprises more than one distinct composition in its structure, where each composition would be located in a certain region of it.

In order to achieve the objectives described above, the present invention provides a process for manufacturing a solid agglomerate, by means of a roller press comprising two rollers provided with cavities fillable with granulated compositions, the process comprising the steps of (i) providing, from above, a first composition in a first upper angular portion of each of the rollers of the roller press, (ii) providing, from above, a second composition on a second upper angular portion of each of the rollers of the roller press, wherein, for the same roller, the second upper angular portion is located downstream of the first upper angular portion with reference to the direction of rotation of each roller, and (iii) pressing the material supplied on the rollers so as to form a solid agglomerate comprising a core formed by the second composition and a cladding formed by the first composition.

Additionally, the present invention provides a system for manufacturing a solid agglomerate, comprising a roller press having two rollers provided with cavities fillable with granulated compositions, the system comprising (i) means for supplying, from above, a first composition into a first upper angular portion of each of the rollers of the roller press, (ii) means for supplying, from above, a second composition on a second upper angular portion of each of the rollers of the roller press, wherein, for the same roller, the second upper angular portion is located downstream of the first upper angular portion with reference to the direction of rotation of each roller, and (iii) means for pressing the material supplied on the rollers so as to form a solid agglomerate comprising a core formed by the second composition and a cladding formed by the first composition.

### BRIEF DESCRIPTION OF THE DRAWINGS

The detailed description below refers to the attached figures and their respective reference numbers.
**Figure 1** illustrates a schematic sectional view of a roller press system according to the state of the art.
**Figure 2** illustrates a schematic sectional view of a preferred embodiment of the system of the present invention.
**Figure 3** illustrates a schematic view of the roller press according to a preferred embodiment of the system of the present invention.
**Figure 4** illustrates a schematic view of a solid agglomerate manufactured using the process and system of the present invention.

### DETAILED DESCRIPTION OF THE INVENTION

Preliminarily, it should be noted that the following description is based on a preferred embodiment of the invention. As will be evident to anyone skilled in the art, however, the invention is not limited to this particular embodiment.

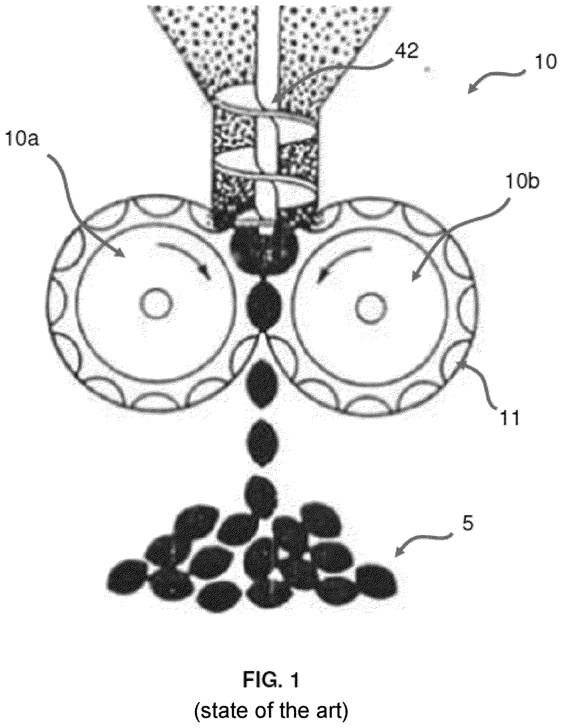

The present invention provides a system for manufacturing a solid agglomerate **5,** comprising a roller press **10** which has two rollers **10a, 10b** rotating in opposite directions and provided with cavities **11** fillable with granulated compositions, as illustrated in **figure 1****.** Said technique, which is already known from the state of the art, comprises a central feeder provided with a dosing screw **42** for feeding a granulated composition between rollers **10a, 10b** for pressing and forming the solid agglomerates **5.**

In the present invention, unlike the technique in **figure 1****,** two different compositions are supplied to the rollers **10a, 10b** at different locations so as to form a solid agglomerate **5** comprising a core formed by one composition and a cladding formed by another composition.

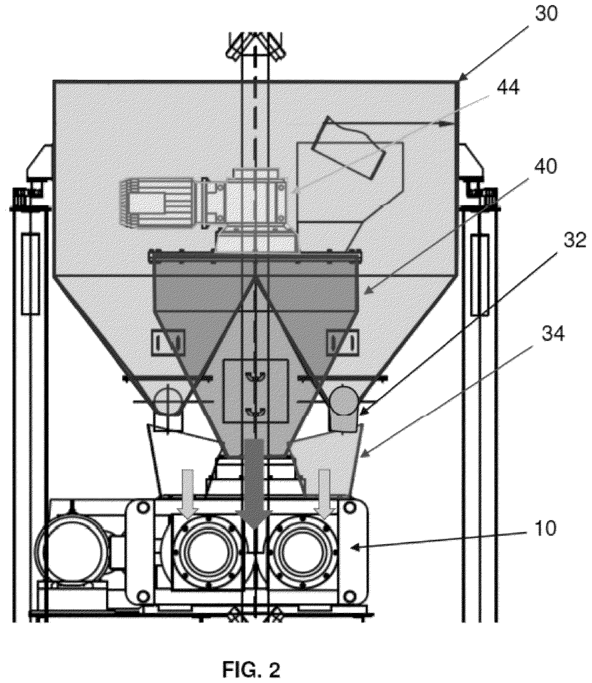

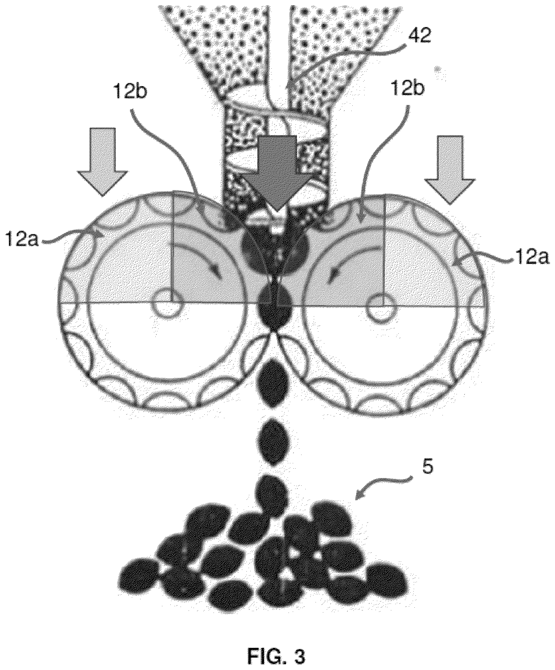

With reference to **figures 2** and **3****,** which illustrate a preferred embodiment of the system of the present invention, means are provided for supplying, from above, a first composition into a first upper angled portion **12a** of each of the rollers **10a, 10b** of the roller press **10.** The supply of the first composition is indicated in **figures 2** and **3** by green arrows.

The means for supplying the first composition onto a first upper angular portion **12a** of each of the rollers **10a, 10b** of the roller press **10** may comprise, for example, (i) at least one side silo **30** adapted to store the first composition, (ii) at least one side dosing screw **32** of the first composition and/or (iii) at least one passage silo **34** adapted to direct the first composition onto the first upper angular portion **12a** of each of the rollers **10a, 10b** of the roller press **10.**

Additionally, the present invention will further comprise means for providing, from above, a second composition on a second upper angled portion **12b** of each of the rollers **10a, 10b** of the roller press **10.** The supply of the second composition is indicated in **figures 2** and **3** by red arrows.

The means for supplying the second composition to a second upper angular portion **12b** of each of the rollers **10a, 10b** of the roller press **10** can include, for example, (i) at least one central silo **40,** which stores the second composition (ii) at least one central dosing screw **42** of the second composition driven by a motor **44.** Preferably, the central dosing screw **42** also pre-compacts the second composition prior to the step of supplying it to the roller press **10.**

It is defined in this description that the first **12a** and second upper angular portions **12b** of each roller **10a, 10b** correspond to the complementary upper angles of the cylinders (rollers), which together add up to **180°.** In **figure 3****,** the first upper angular portion **12a** is represented on each roller by the green quarter circle, while the second upper angular portion **12b** is represented on each roller by the red quarter circle.

Although each of the angular portions is represented in **figure 3** by an opening angle of 90° (a quarter of a circle), these portions are not limited to this specific angle and can vary according to need. The important thing is to ensure that for the same roller **10a, 10b,** the second upper angular portion 12b is located downstream of the first upper angular portion **12a** with reference to the direction of rotation of each roller **10a, 10b.**

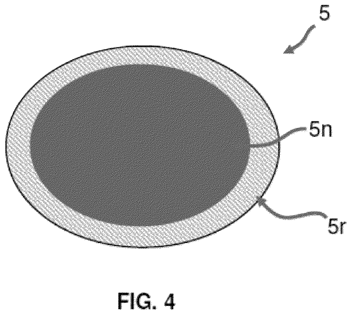

Thus, for a given solid agglomerate manufactured by the system of the present invention, its cladding material (first composition) will first be deposited on the rollers in the first upper angular portion **12a.** This material will partially or completely fill the cavities **11** of the rollers **10a, 10b.** Then, in the second upper angular portion **12b,** close to the point of least distance between rollers **10a, 10b,** which is where the pressing takes place, the core material of the solid agglomerate (second composition) is supplied onto rollers **10a, 10b.** Thus, when pressing takes place, an agglomerate **5** will be formed comprising the first composition in its **5r** cladding and the second composition in its **5n** core, as shown in **figure 4****.**

The ratio between the amount of material in the core and in the cladding of the solid agglomerate **5** will be regulated by the feed rate of each material in the press **10.** By increasing, for example, the feed rate of the second composition and leaving the first unchanged, a solid agglomerate with a larger and/or denser core is achieved.

The present invention further provides a process for manufacturing a solid agglomerate **5,** by means of a roller press 10 comprising two rollers **10a, 10b** provided with cavities **11** fillable with granulated compositions, the process comprising the steps of:
a) providing, from above, a first composition on a first upper angular portion **12a** of each of the rollers **10a, 10b** of the roller press **10;**
b) providing, from above, a second composition on a second upper angular portion **12b** of each of the rollers **10a, 10b** of the roller press 10, whereby, for the same roller **10a, 10b,** the second upper angular portion 12b is located downstream of the first upper angular portion **12a** with reference to the direction of rotation of each roller **10a, 10b;** and
c) pressing the material supplied onto rollers **10a, 10b** to form a solid agglomerate **5** comprising a core **5n** formed by the second composition and a cladding **5r** formed by the first composition.

Preferably, the step of providing a first composition on a first upper angular portion **12a** is carried out simultaneously and separately for each roll **10a, 10b,** as shown in **figures 2** and **3****.**

Preferably, the step of providing a second composition on a second upper angled portion **12b** is carried out at the same location for both rollers **10a, 10b.** More preferably, this step is carried out between the rollers **10a, 10b.**

Preferably, the process of the present invention additionally comprises the step of pre-compacting the second composition prior to the step of supplying a second composition into a second upper angled portion **12b** of each of the rollers **10a, 10b** of the roller press **10.** As already mentioned, this step is preferably carried out by the central dosing screw **42.**

The solid agglomerate **5** formed by the process and system described above is illustrated in **figure 4** and comprises a core **5n** formed by the second composition and a cladding **5r** formed by the first composition. The solid agglomerate **5** of the present invention may be, for example, a combustible coal briquette or a metallic agglomerate, such as a pellet or a ferrous briquette.

In the case of fuel briquettes, preferably the second composition, which forms the **5n** core, comprises at least one coking coal and at least one binder. The core material **5n,** therefore, is the coking material commonly used in fuel briquettes. More preferably, the second composition, which forms the **5n** core, comprises 60 to 70% by mass of coking coal and 6 to 10% by mass of binder.

Preferably, the first composition, which forms the **5r** cladding, comprises a non-coking coal, or residue thereof, and at least one binder. The coal in the cladding composition **5r** can be, for example, coke grindings or coal waste in general, low quality coals, etc. It is worth noting here that any inert coal waste (non-coking) can be used in the composition of the **5r** cladding. In this way, when heated inside the reduction furnace, the **5r** cladding material will not coke, which prevents the surfaces of the agglomerates from sticking together and, consequently, the formation of curls.

Most preferably, the first composition, which forms the **5r** cladding, comprises 70 to 95% by mass of non-coking coal, coke grindings, coal waste or any combination thereof, and 5 to 15% by mass of binder.

In a second embodiment of the present invention, the solid agglomerate 5 is a metallic agglomerate, such as a ferrous pellet or briquette. In this case, an inert material, preferably metallic, is used in the cladding **5r** of the agglomerate to serve as a sacrificial material. The core **5n** would be formed by the material of interest.

The solid chipboard **5** of the present invention can be manufactured in any existing geometric shape, so that the scope of protection of the present invention is not limited to the oval shape represented in **figure 4****.**

Thus, as explained above, the present invention provides a system and a process for manufacturing a solid agglomerate so that it comprises more than one distinct composition in its structure, where each composition would be located in a certain region of it (cladding and core).

Numerous variations affecting the scope of protection of the present application are permitted. This reinforces the fact that the present invention is not limited to the particular configurations/concretizations described above.

## Claims

1. The process for manufacturing a solid agglomerate (5), by means of a roller press (10) comprising two rollers (10a, 10b) fitted with cavities (11) fillable with granulated compositions, **characterized in that** it comprises the steps of:
providing, from above, a first composition on a first upper angled portion (12a) of each of the rollers (10a, 10b) of the roller press (10);
providing, from above, a second composition in a second upper angled portion (12b) of each of the rollers (10a, 10b) of the roller press (10), wherein, for the same roller (10a, 10b), the second upper angular portion (12b) is located downstream of the first upper angular portion (12a) with reference to the direction of rotation of each roller (10a, 10b); and
pressing the material supplied onto the rollers (10a, 10b) to form a solid agglomerate (5) comprising a core (5n) formed by the second composition and a cladding (5r) formed by the first composition.

2. Process according to claim 1, **characterized in that** the step of providing a first composition in a first upper angular portion (12a) is carried out simultaneously and separately for each roll (10a, 10b).

3. Process according to claim 1 or 2, **characterized in that** the step of providing a second composition in a second upper angular portion (12b) is carried out in the same place for both rollers (10a, 10b).

4. Process according to claim 3, **characterized in that** the step of providing a second composition in a second upper angular portion (12b) is carried out between the rollers (10a, 10b).

5. Process according to any one of claims 1 to 4, **characterized in that** it further comprises the step of pre-compacting the second composition prior to the step of supplying a second composition into a second upper angular portion (12b) of each of the rollers (10a, 10b) of the roller press (10).

6. System for manufacturing a solid agglomerate (5), comprising a roller press (10) having two rollers (10a, 10b) provided with cavities (11) fillable with granulated compositions, the system **characterized in that** it comprises:
means for providing, from above, a first composition on a first upper angled portion (12a) of each of the rollers (10a, 10b) of the roller press (10);
means for supplying, from above, a second composition on a second upper angled portion (12b) of each of the rollers (10a, 10b) of the roller press (10), wherein, for the same roller (10a, 10b), the second upper angular portion (12b) is located downstream of the first upper angular portion (12a) with reference to the direction of rotation of each roller (10a, 10b); and
means for pressing the material supplied onto the rollers (10a, 10b) to form a solid agglomerate (5) comprising a core (5n) formed by the second composition and a cladding (5r) formed by the first composition.

7. System according to claim 6, **characterized in that** the means for providing a first composition in a first upper angular portion (12a) are at least one of:
at least one side silo (30) adapted to store the first composition;
at least one side dosing screw (32) of the first composition; and
at least one passage silo (34) adapted to direct the first composition over the first upper angular portion (12a) of each of the rollers (10a, 10b) of the roller press (10).

8. System according to claim 6 or 7, **characterized in that** the means for providing a second composition in a second upper angular portion (12b) are at least one of:
at least one central silo (40) adapted to store the second composition; and
at least one central dosing screw (42) of the second composition driven by a motor (44).
